# EUROPEAN PATENT APPLICATION

(11) **EP 4 450 531 A1**
(43) Date of publication of application: **23.10.2024**
(21) Application number: 23169304.5
(22) Date of filing: 21.04.2023
(51) Int. Cl.: C08G 18/09, C08G 18/16, C08G 18/20, C08G 18/22, C08G 18/36, C08G 18/48, C08G 18/66, C08G 18/76

(54) **A METHOD FOR OBTAINING REACTIVE POLYOL MATERIALS FROM WASTE AGRICULTURAL BIOMASS AND THEIR USE IN MANUFACTURING FLAME-RETARDANT FOAM THERMAL INSULATION MATERIALS**

(30) Priority: 20.04.2023 PL 44452023
(71) Applicant: Uniwersytet Kazimierza Wielkiego, 85-064 Bydgoszcz (PL)
(72) Inventor: Paciorek-Sadowska, Joanna, 85-790 Bydgoszcz (PL); Borowicz, Marcin, 88-306 DABROWA (PL); Isbrandt, Marek, 85-822 Bydgoszcz (PL); Sander, Pawe, 89-200 ZAMOSC (PL)

(57) **Abstract**

The subject of the invention is the method for obtaining polyol materials in the process of liquefying agricultural waste in the form of oil cakes of plant origin, particularly useful in producing fire-safe, thermal insulation polyurethane foams with increased biodegradability. The essential characteristics of the invention is the development of a method for obtaining flame-retardant polyol in the process of liquefying by-products of agricultural production in the form of ground plant-based oil cakes from rapeseed, soy, palm, sunflower, linseed, rice, coconut, safflower, hemp, pumpkin, evening primrose, milk thistle, black caraway, and particularly white mustard (*Sinapis alba*), and using this polyol to synthesize fire-safe rigid polyurethane foams with increased biodegradability. The subject of the invention can be broadly used in industry as insulation for tanks, pipelines, etc., or in refrigeration and construction as thermal insulation, soundproofing, and construction material.

## Description

The subject of the invention is the method of obtaining polyol raw materials in the process of liquefaction of agricultural waste in the form of oil cakes; polyols of this kind are particularly useful in manufacturing flame-retardant polyurethane foams for thermal insulation with increased biodegradability.

Polyurethanes (PU) are an important group of polymer materials, which have a broad range of uses due to their excellent mechanical, chemical and physical properties. A conventional method of manufacturing polyurethane involves reacting polyol material with polyisocyanate material, during which a urethane group is formed in the main chain [Brzeska, J.; Piotrowska-Kirschling, A. A Brief Introduction to the Polyurethanes According to the Principles of Green Chemistry. Processes 2021, 9, 1929. https://doi.org/10.3390/pr9111929; F. M. de Souza, R. K. Gupta and P. K. Kahol; Polyurethane Chemistry: Renewable Polyols and Isocyanates ACS Symposium Series; American Chemical Society: Washington, DC, 2021; A. E. Nieuwenhuyse, Thermal Insulation Materials Made of Rigid Polyurethane Foam (PUR/PIR), Federation of European Rigid Polyurethane Foam Associations, Brussels, Belgium, 2006; Li, Y., Jin, Y., Fan, W. et al. A review on room-temperature self-healing polyurethane: synthesis, self-healing mechanism and application. J Leather Sci Eng 4, 24 (2022). https://doi.org/10.1186/s42825-022-00097-0.

Depending on the requirements, the composition of materials for manufacturing polyurethane needs to be enriched with cross-linking agents, porophores, substances decreasing flammability, catalysts and other additives. Most compositions for producing polyurethane foams contains water as a medium reacting with isocyanate in order to chemically produce carbon dioxide as a porophore that will foam the reaction mixture. Low-boiling hydrocarbons are also used as substances that physically blow polyurethane [L. James LeeJyh-Yee Lan, Nucleating agents for pir foams, Patent WO2007149418A2, 2007-12-27; L. D. Simoni, E. B. Wysong, K. K. Viacheslav A. Petrov, Compositions comprising 1,2-dichloro-1,2-difluoroethylene for use in foam blowing applications, US20220033607A1, 2022-02-03]. Manufacturing plastics - including polyurethanes and composites - of biological origin is one of the most important issues in research and development focused on worldwide environmental protection [Abrha, H. Cabrera, J. Dai, Y. Irfan, M. Toma, A. Jiao, S. Liu, Bio-Based Plastics Production, Impact and End of Life: A Literature Review and Content Analysis. Sustainability 2022, 14, 4855. https://doi.org/10.3390/su14084855; Kaur R, Singh P, Tanwar S, Varshney G, Yadav S., Assessment of Bio-Based Polyurethanes: Perspective on Applications and Bio-Degradation. Macromol. 2022; 2(3):284-314. https://doi.org/10.3390/macromol2030019; Rosenboom, J. G., Langer, R. & Traverso, G., Bioplastics for a circular economy. Nature Reviews Materials, 117-137 (2022). https://doi.org/10.1038/s41578-021-00407-8]. Scientific research on polyurethanes and materials for their production that come from renewable sources have an immense potential of contributing to this development. Each of the three pillars or categories of sustainable development - environment, economy and society - is of crucial importance for our continued proper development or even our survival as a species. The production of greenhouse gases, in particular CO₂, has been to a large extent responsible for climate change we are experiencing now, so we should strive to decrease GHG emission. One of the largest sources of CO₂ emission is burning fossil fuels to produce energy for heating or cooling purposes. In this context, the primary goal is to reduce carbon dioxide production by making buildings more energy-efficient; the simplest and most cost-effective way to start this process is by using effective insulation in the form of polyurethane foam.

At present, polyurethane manufacturing is based predominantly on oil products. Considering the sustainable development goals, the provisions of the Kyoto Protocol on limiting the use of fossil fuels, and the directive resulting from the climate packages, the EU put on its member states an obligation to ensure that their industries increase their use of renewable resources [Hejna A., Haponiuk J., Piszczyk L., Klein M., Formela K., Performance properties of rigid polyurethanepolyisocyanurate/brewers' spent grain foamed composites as function of isocyanate index, e-Polymers, 2017, 17 (5), 427, https://doi.org/10.1515/epoly-2017-0012].

One of the main materials used in polyurethane production are polyols. Polyols obtained from plant sugars, bio-waste and plant oils should have characteristics similar to polyols of petrochemical origin so that they can be used as alternatives.

It is known that succinic acid can be used as material for synthesis of bio-based polyols. To achieve this, succinic acid is polycondensated with glycols (of petrochemical or natural origin) at the temperature 170-200°C. Polyol materials synthesized in this way have slightly higher acid and hydroxyl value than conventional petrochemical polyester polyols [Oliviero, M., Verdolotti, L., Stanzione, M., Lavorgna, M., Iannace, S., Tarello, M., Sorrentino, A., Bio-based flexible polyurethane foams derived from succinic polyol: Mechanical and acoustic performances. J. Appl. Polym. Sci., 2017, 134, Article ID: 45113]. Bio-based succinic acid is used as a substitute of adipic acid obtained from petroleum.

Polyurethane manufacturing uses also renewable plant sources, mainly to produce hydroxyl bio-components in the form of polyols used in the methods of making polyurethane foams [Prociak A., Poliuretanowe materialy termoizolacyjne nowej generacji, Wyd. PK , Kraków 2008; Narine S. S., Kong X., Bouzidi L., Sporns P., Physical Properties of Polyurethanes Produced from Polyols from Seed Oils: I. Elastomers; J Amer Oil Chem Soc , 84, 2007, 65. 17;
Tanaka R, Hirose S, Hatakeyama H., Preparation and characterization of polyurethane foams using a palm oil-based polyol, Bioresource Technol, 99, 2008, 3810].

Before they can be used to synthesize polyurethane materials, most of plant-based oils should be chemically modified in order to unblock or introduce hydroxyl groups. This is necessary because the chemical structure of plant-based oils lacks functional groups capable of reacting with isocyanate groups and producing urethane bonds. The currently available literature presents many ways of synthesizing and using polyols to manufacture polyurethane products. The obtained polyols are characterized by a range of such parameters as viscosity, average molar mass, functionality and hydroxyl value. As technologies for polyol synthesis can be modified, the resulting materials can have a variety of desired properties. Also, bio-based polyols can substitute commercially available petroleum-based polyols in synthesis of polyurethane materials.

However, plant-based oils, which are the main raw material in the technology of producing bio-based polyurethanes, are used mainly in food industry. Using these oils for large-scale production of plastics could negatively affect their prices and increase the cost of various food products.

Another problem related to using polyurethane products is their flammability. PUR foams are flammable due to the organic character of polymer matrix and very large surface area that comes into contact with the gaseous phase. Due to the dynamic development of many areas of contemporary technology and daily life, it is necessary to search for new materials with better properties than traditional ones [Przygocki W., Wlochowicz A., Janowska G.: Palność polimerów i materialów polimerowych, WNT, Warszawa 2007; Chen M.J., Chen Ch.R., Tan Y. et al.: Industrial and Engineering Chemistry Research 2014, 53, 1160. http://dx.doi.org/10.1021/ie4036753]. Therefore polyurethanes are modified in order to make them more fire resistant [Lu S, Feng Y, Zhang P, Hong W, Chen Y, Fan H, Yu D, Chen X. Preparation of Flame-Retardant Polyurethane and Its Applications in the Leather Industry, Polymers. 2021; 13(11):1730. https://doi.org/10.3390/polym13111730; Hejna A., Materials, Clays as Inhibitors of Polyurethane Foams' Flammability, 2021, 14, 4826. https://doi.org/10.3390/ma14174826]. The products of combustion of such polyurethanes are carbon oxides, hydrogen cyanide, nitrous oxides and nitriles (acetonitrile, acrylonitrile) [Dobrzyńska, R. The toxicity of products of thermal decomposition and combustion of polyurethane foams used in manufacturing of upholstered furniture. Safety Fire Tech. 2012, 4, 53-58]. Polyurethanes can be made more flame-resistant by including in their structure reactive compounds or by adding nonreactive compounds (which decrease flammability) [Ying Liao, Yu Chen, Caiyan Wan, Guangxian Zhang , Fengxiu Zhang, An eco-friendly N-P flame retardant for durable flame-retardant treatment of cotton fabric, International Journal of Biological Macromolecules, Volume 187, 2021, 251-261, https://doi.org/10.1016/j.ijbiomac.2021.07.130; B. Biswas, B. Kandola, The Effect of Chemically Reactive Type Flame Retardant Additives on Flammability of PES Toughened Epoxy Resin and Carbon Fibre-Reinforced Composites, Polymers for Advanced Technologies, 2011, 22 (7), pp.1192. ff10.1002/pat.1960ff. ffhal-00627543f], or by covering the products with non-flammable, isolating coatings [Weil ED. Fire-protective and flame-retardant coatings—a state-of-the-art review, Journal of Fire Sciences. 2011;29:259-295]. Among the numerous methods of decreasing the flammability of polymer materials, the most significant ones use flame-retardant substances; it is important, however, that such substances do not contain elements from the halogen group. If halogen-based flame retardants are added to polymer matrix, such substances, when burning, release highly toxic smoke and gases that are dangerous to human health and life. In the case of porous polyurethanes, increased fire resistance is often achieved by adding several flame retardants that act in synergy by limiting flammability or slowing the speed at which the material burns [Paciorek-Sadowska J. Polyol Containing Boron Atoms as a Compound which Reduces Flammability of Rigid Polyurethane-Polyisocyanurate Foams. Aspects of Polyurethanes 2017, http://dx.doi.org/10.5772/intechopen.69585; Lei Liu, Zhengzhou Wang, Synergistic effect of nano magnesium amino-tris-(methylenephosphonate) and expandable graphite on improving flame retardant, mechanical and thermal insulating properties of rigid polyurethane foam, Materials Chemistry and Physics, Volume 219, 2018, https://doi.org/10.1016/j.matchemphys.2018.08.010].

Thus researchers continue to seek a composition of raw materials that will enable manufacturing PUR products with decreased flammability while simultaneously limiting the amount of components toxic to the environment. It is also important that the useful properties of such foams should be the same or better than those of foams without flame-retardant compounds [Kulesza K., Pielichowski K.: Journal Anal. Apel. Pyrolysis, 2006, 76; Aaronson A.M.: Phosphorous Chemistry, ACS Symp. Ser. No 486, Washington DC, ACS 1992].

Intense development of polyurethane materials is strictly connected with creating waste of both post-production and post-consumer type. Due to growing problems with the utilization of increasing amounts of waste and the resulting threats to natural environment, as well as due to new legislative solutions in highly industrialized countries, researchers and industry are increasingly interested in efficient methods of utilizing plastic waste. One of the solutions was to implement large-scale chemical recycling of polyurethanes. The main objective for chemical recycling methods is to obtain a liquid product whose properties allow its reuse. Many methods of chemical recycling of PUR have already been described in literature [D. Simón, A.M. Borreguero, A. de Lucas, J.F. Rodriguez, Recycling of polyurethanes from laboratory to industry, a journey towards the sustainability, Waste Management, Volume 76, June 2018, Pages 147-171, https://doi.org/10.1016/j.wasman.2018.03.041]. It can be achieved by reactions with water (hydrolysis), alcohols (alcoholysis), amines (aminolysis) and other kinds of degradation. One of the basic problems with recycling polyurethanes results from the fact that many different materials are used to produce them. That is why the obtained glycolysates have a variety of characteristics, which in turn makes it difficult to use them for industrial manufacturing of polyurethanes [M. Chanda, Chemical aspects of polymer recycling, Advanced Industrial and Engineering Polymer Research, Volume 4, Issue 3, July 2021, Pages 133-150, https://doi.org/10.1016/j.aiepr.2021.06.002]. Developing different methods of chemical recycling for waste from different sources is highly unprofitable, so vast majority of such waste is delivered to landfills or dumped illegally. Storage of polyurethane foam waste is particularly problematic as due to their low density they occupy a lot of space and are not biodegradable, so they may remain in landfills even for dozens of years. The limited area of landfills, the growing cost of waste storage, and the regulations of environmental law make it necessary - for environmental as well as economic reasons - to develop effective and safe methods for utilizing such waste. A key role here is played by biodegradation processes, involving decomposition of plastics in the environment due to the activity of microorganisms such as bacteria, fungi, yeasts and algae in the conditions conducive to their growth, i.e. in the presence of oxygen, moisture and mineral nutrients, at suitable temperature (20-60°C) and at appropriate pH [N. Mahajana, P. Gupta, New insights into the microbial degradation of polyurethanes, RSC Advances, 2015, 5, 41839 - 41854, doi.org/10.1039/C5RA04589D]. The degradation process produces CO₂, methane and water; it occurs due to the combination of several mechanisms (photolytic, thermal, mechanical, hydrolytic, oxidizing and biological) Wang, Y.; Ruan, C.; Sun, J.; Zhang, M.; Wu, Y.; Peng, K. Degradation studies on segmented polyurethanes prepared with poly (d, l-lactic acid) diol, hexamethylene diisocyanate and different chain extenders. Polym. Degrad. Stab. 2011, 96, 1687-1694; Zeenat; Elahi, A.; Bukhari, D.A.; Shamim, S.; Rehman, A. Plastics degradation by microbes: A sustainable approach. J. King Saud. Univ. Sci. 2021, 33, 101538; Magnin, A.; Pollet, E.; Phalip, V.; Avérous, L. Evaluation of biological degradation of polyurethanes. Biotechnol. Adv. 2020, 39, 107457]. The materials are initially fragmented by biotic and abiotic factors, and then macromolecules are split into monomers and oligomers through enzymatic hydrolysis and/or oxidation. These molecules are subsequently assimilated and mineralized by microorganisms, contributing to microbial growth [Rosu, D.; Rosu, L.; Cascaval, C.N. IR-change and yellowing of polyurethane as a result of UV irradiation. Polym. Degrad. Stab. 2009, 94, 591-596]. Studies focus on determining the types of microorganisms that initiate biodegradation processes, defining the degradation path and pinpointing the types of enzymes that participate in this process. The results demonstrate that appropriately modified polyurethanes degrade under the influence of fungi as well as bacteria [Lopes, R.V.V.; Loureiro, N.P.D.; Quirino, R.L.; Gomes, A.C.M.; Pezzin, A.P.T.; Manzur, L.P.; dos Santos, M.L.; Sales, M.J.A. Biodegradation Study of Polyurethanes from Linseed and Passion Fruit Oils. Coatings 2022, 12, 617. https://doi.org/10.3390/coatings12050617]. Introducing appropriate groups into the structure of polyurethane, for example ester and urethane groups, makes them susceptible to enzyme-catalyzed hydrolysis [Khruengsai S, Sripahco T and Pripdeevech P (2022) Biodegradation of Polyester Polyurethane by Embarria clematidis. Front. Microbiol. 13:874842. doi: 10.3389/fmicb.2022.874842; Xuerui Jin, Jixin Dong, Xufan Guo, Mingzhu Ding, Rui Bao, Yunzi Luo, Current advances in polyurethane biodegradation, Polym International 2022;71: 1384-1392, DOI 10.1002/pi.6360]. Polyurethanes can be synthesized from various sets of monomers. A typical PU contains urethane bonds created by linking polyol, hydrocarbon with at least two hydroxyl groups, and diisocyanate. Polyol types can differ in terms of chemical structure, which may allow biodegradation of these plastics. Polyurethane biodegradation is to a large extent controlled by the activity of released or surface-bound enzymes and their capability to access ester groups of elastic segments [Gary T. Howard, Biodegradation of polyurethane: a review, International Biodeterioration & Biodegradation Volume 49, Issue 4, June 2002, Pages 245-252, https://doi.org/10.1016/50964-8305(02)00051-3]. However, the possibility of using enzymes to fully depolymerize the product remains insufficiently researched. Developing polyurethane foams consisting of ester and urethane bonds that can be naturally hydrolyzed will point to a practical way of depolymerization of these materials and at the next stage - to a method of their biodegradation. What is a very attractive pool of intermediate products for manufacturing e.g. polyurethane materials sensitive to biodegradation and development of eco-friendly recycling processes is broadly defined biomass. It contains substances used as flame retardants as well as cellulose, which intensifies the process of biodegradation. There is a growing number of reports on utilizing different types of biomass not only as a source of renewable energy but also as material for obtaining e.g. bio-based polyols, which can replace petroleum-based polyols in the synthesis of polyurethane materials. Waste biomass resources come mainly from agriculture (excess straw and hay), forestry (wood waste), energy crops, biological sources (water plants and sediments) and municipal management. Lignocellulosic biomass is a promising alternative for obtaining bio-based polyols that can find applications in the production of plastics, first of all due to their renewability. To obtain a high-value product, biomass should be subjected e.g. to liquefaction. Liquefaction is a low-temperature, thermochemical process based on the reactions of solvolysis. This process leads to the formation of smaller molecules or fragments soluble in water or an appropriate solvent. These fragments with low molecular weight are characterized by low stability and high reactivity, due to which they can be re-polymerized in order to obtain oily compounds with a wide range of molecular weights [Liang L., Mao Z., Li Y., Wan C., Wang T., Zhang L., Liquefaction of crop residues for polyol production, Bioresources, 1, 2006, 1]. Products obtained in this way can be used in manufacturing polyurethane materials, epoxy and phenolic resins, and glues [Hassan E.M., Shukry N., Industrial Crop and Products, Polyhydric alcohol liquefaction of some lignocellulosic agricultural residues, 27, 2008, 33]. Lignocellulosic biomass contains for example components containing hydroxyl groups that can be used among others in reactions with isocyanates. Various lignocellulosic materials such as wood [Kurimoto Y, Takeda M, Koizumi A et al (2000) Mechanical properties of polyurethane films prepared from liquefied wood with polymeric MDI. Bioresour Technol 74:151-157. https://doi.org/10.1016/S0960-8524(00)00009-2], paper [Lee S-H, Yoshioka M, Shiraishi N (2000) Liquefaction of corn bran (CB) in the presence of alcohols and preparation of polyurethane foam from its liquefied polyol. J Appl Polym Sci 78:319-325. https://doi.org/10.1002/1097-4628(20001010)78:2<319::AID-APP120>3.0.CO;2-Z], straw [Wang H, Chen HZ (2007) A novel method of utilizing the biomass resource: rapid liquefaction of wheat straw and preparation of biodegradable polyurethane foam (PUF). J Chin Inst Chem Eng 38:95-102. https://doi.org/10.1016/j.jcice.2006.10.004], bamboo [Yip J, Chen M, Szeto YS, Yan S (2009) Comparative study of liquefaction process and liquefied products from bamboo using different organic solvents. Bioresour Technol 100:6674-6678. https://doi.org/10.1016/j.biortech.2009.07.045], sugar cane [Abdel Hakim AA, Nassar M, Emam A, Sultan M (2011) Preparation and characterization of rigid polyurethane foam prepared from sugar-cane bagasse polyol. Mater Chem Phys 129:301-307. https://doi.org/10.1016/j.matchemphys.2011.04.008] and grain stalks [Wang H, Chen HZ (2007) A novel method of utilizing the biomass resource: rapid liquefaction of wheat straw and preparation of biodegradable polyurethane foam (PUF). J Chin Inst Chem Eng 38:95-102. https://doi.org/10.1016/j.jcice.2006.10.004] were liquefied with various solvents in order to obtain polyols, and subsequently produce polyurethane foams. However, due to the origins of biomass - mainly form agriculture - it can be a raw material that is the subject of a competition due to the fact that some of its sources are used for food-related purposes. Yet in the case of oil cakes, which are oil industry waste, this is not a problem as oil cakes are not assigned in large amounts for consumption or agricultural purposes. They are considered as organic waste of varying nutritional, energy and fertilizing value, often characterized by adverse pH. Due to their content, they pose an ecological threat and a significant risk factor as putrefaction processes can occur if oil cakes are stored improperly. Therefore they are a difficult issue from economic and ecological point of view. So far the solutions to this difficulty proposed by academic literature and industry are only fragmentary and do not provide a comprehensive resolution [ 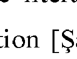 ahin, S., Elhussein, E. A. A., 2018. Valorization of a biomass: phytochemicals in oilseed by-products. Phytochemistry Reviews, 17 (4), 657-668. https://doi.org/10.1007/s1110]. Oil cakes from oil plants can be characterized by high content of tannins, which limits their use as animal fodder. They have a negative impact on animals' productivity, mostly because they disturb the proper course of physiological processes, including the inactivation of native digestive enzymes and the entry of tannins into metabolic pathways as substitutes of other substances. They are absorbed from the alimentary tract, show goitrogenic activity, inhibit the synthesis of thyroid hormones and disrupt the work of liver and kidneys [Strzetelski, J. A., Kowalczyk, J., Krawczyk, K., Stasiniewicz, T., Lipiarska, E., 1998a. Evening primrose (Oenothera paradoxa) oil cake or ground rape seed supplement to diets for dairy cows. J. Anim. Feed Sci, 7 (4), 365-375; Strzetelski, J. A., Kowalczyk, J., Niwinska, B., Krawczyk, K., Maciaszek, K., 1998b. A note on rearing calves on diets supplemented with evening primrose (Oenothera paradoxa) oil cake. Journal of Animal and Feed Sciences, 7 (4), 377-383].

Oil cakes are a waste product, whose liquefaction and transformation into valuable bio-material is an answer to the accumulation of problematic post-production waste that cannot be utilized in direct processes of agricultural production. Using bio-based polyols from oil cakes in polyurethane formulation is an innovative solution that will enable obtaining new, non-flammable polyurethane materials with increased biodegradability and favorable usage characteristics. Furthermore, using waste oil cakes in chemical synthesis meets the premises of closed-loop economy, whose objective is to minimize production of waste, and re-using any that is generated.

Author's own research included work on developing new, eco-friendly polyols with the use of the technique of liquefaction of agricultural waste products in the form of ground oil cakes from such oilseed as rapeseed, soy, palm, sunflower, linseed, rice, coconut, safflower, hemp, pumpkin, evening primrose, milk thistle, black caraway, and particularly white mustard (*Sinapis alba),* containing sulfur, phosphorus and nitrogen. If introduced into the premix as polyol raw material, they will effectively lower the flammability of polyurethane, at the same time decreasing the use of industrial flame retardants, which are expensive and toxic to the environment. The research also focused on the need to produce polyols that would not disrupt the process of polyurethane manufacturing. Another research goal was to determine the impact of new bio-based polyols on the structure, flammability and physical-mechanical properties of polyols.

The essential characteristics of the invention is development of a method for obtaining flame retardant polyol in the process of liquefaction of agricultural waste products in the form of ground oil cakes from rapeseed, soy, palm, sunflower, linseed, rice, coconut, safflower, hemp, pumpkin, evening primrose, milk thistle, black caraway, and particularly white mustard (*Sinapis alba),* and using the said polyol to synthesize fire-resistant, rigid polyurethane foams with increased biodegradability.

The method of obtaining flame-retardant polyol, designated for synthesizing fire-resistant, rigid polyurethane foams with increased biodegradability, involves a single stage process based on solvolysis, that is, reaction between a solvent containing hydroxyl groups (the best option is 2,2'-thiodiethanol) and agricultural waste products in the form of ground oil cakes, such as rapeseed, soy, palm, sunflower, linseed, rice, coconut, safflower, hemp, pumpkin, evening primrose, milk thistle, black caraway, and particularly white mustard (*Sinapis alba),* in the presence of an acid catalyst (the best option is Amberlite ion-exchange resin), as described by the invention, is based on the following: 2,2'-thiodiethanol in the amount of 360.00 g, raw (non-deoiled) ground oil cake from white mustard (*Sinapis alba*) in the amount of 40.00 g and acid catalyst in the form of Amberlite ion-exchange resin in the amount of 15.00 g (the mass ratio of reagents is 9: 1:0.375 for 2,2'-thiodiethanol, oil cake and catalyst respectively). are subjected to the reaction of solvolysis, which is conducted for 4 to 7 hours at the temperature 150-180°C

Flame-retardant polyol, obtained in the way described by the invention in the process of liquefaction of agricultural waste products in the form of ground oil cakes from rapeseed, soy, palm, sunflower, linseed, rice, coconut, safflower, hemp, pumpkin, evening primrose, milk thistle, black caraway, and particularly white mustard (*Sinapis alba),* with varying hydroxyl values, can be used in the process of synthesis of rigid polyurethane foams, replacing from 10% to 100% of petroleum-based polyol, and - besides being a polyol component - it can also act as a substance that is flame retardant and increases biodegradability of obtained foams. can play the role

The method of producing rigid polyurethane foams in the reaction of polymer 4,4'-diisocyanate diphenylmethane with glycol that is the product of sorbitol oxypropylenation with L_{OH} = 420 mg KOH/g, with the participation of catalysts in the form of 33% solution of potassium acetate in diethylene glycol and 33% solution of 1,4-diazabicyclo[2,2,2]octane in diethylene glycol, surfactant in the form of polysiloxane-polyoxyethylene-polyoxypropylene copolymer, chemical porophore in the form of distilled water, according to the invention description is based on the fact that the reaction is carried out by replacing the product of sorbitol oxypropylenation with a bio-based polyol with decreased flammability.

The advantage of the method described in the invention is the single-stage way of producing rigid polyurethane foams with decreased flammability according to PN-76/C-89020, decreased brittleness according to ASTM C-421-61, increased resistance to aging according to ISO 1923:1981 and PN-ISO 4590:1994, lower absorbability and water absorption according to DIN 53433, increased compressive strength according to PN-EN 842, higher biodegradability according to ISO 17556: 2019, and lower heat conductivity coefficient λ according to the ISO 8301 norm in comparison to model foam without the addition of flammability-decreasing polyol.

The subject of the invention was presented through the examples of embodiment:
***Example 1.* Obtaining biomass-based polyol.** The synthesis is conducted as a single-stage process in a jacketed glass reactor, equipped with a reflux condenser, temperature sensor and mechanical stirrer. 2,2'-thiodiethanol is introduced into the reactor in the amount of 360.00 g, then raw (non-deoiled) ground oil cake from white mustard (*Sinapis alba*) in the amount of 40.00 g and acid catalyst in the form of Amberlite ion-exchange resin in the amount of 15.00 g (the mass ratio of reagents is 9:1:0.375 for 2,2'-thiodiethanol, oil cake and catalyst respectively). The reaction of mustard oil cake solvolysis is conducted for 4 to 7 hours at the temperature 150-180°C. After the reaction the catalyst is filtered out together with impurities.
   The product of the reaction is dark-brown polyol in the form of moderately viscous liquid, with hydroxyl value 442.02 ± 1.63 mg KOH/g, acid number 1.20 ± 0.32 mg KOH/g, density 1.18 ± 0.01 g/cm³, water content 0.05 ± 0.01 wt%, pH 7.0 ± 0.2, content of flame-retardant elements: S - 23.57%, P - 1.19% and N - 0.52%.
***Example 2.* Obtaining foams based on polyols from biomass.** Premix prepared from 60.12 g (0.9 R) of the product of sorbitol oxypropylenation (Rokopol RF-551) with L_{OH} = 420 mg KOH/g; 6.35 g (0.1 R) of biomass polyol with L_{OH} = 442.02 mg KOH/g obtained in the way presented in Example 1; 5.39 g of polysiloxane-polyoxyethylene-polyoxypropylene copolymer; 7.93 g of 33% solution of potassium acetate in diethylene glycol; 3.17 g of 33% solution of 1,4-diazabicyclo[2,2,2]octane in diethylene glycol and 3.17 g of distilled water are mixed with 250.60 g of polymeric 4,4'-diisocyanate diphenylmethane (Purocyn B) with 31% content of -NCO group, and poured into an open form. The resulting product is rigid polyurethane/polyisocyanuric foam with apparent density 42.21 kg/m³ (DIN 53420) ISO 845:1988; brittleness 16.11% (ASTM-C-421-61); compressive strength in the foam rise direction 346.86 kPa (DIN 53577) ISO 844:1993; oxygen index 22.9% (PN-76/C-89020); water absorption 1.5% (DIN 53433); heat conductivity coefficient 23.5 mW/(mK) (Lasercomp FOX 200 heat flow meter); retention 95.8% (ASTM D3014-73); burn rate 0.97 mm/s (PN-78/C-05012); change in linear dimension measured in the rise direction after being thermostated for 48 h at 120°C 1.5% (ISO 1923:1981); change in geometric volume after being thermostated for 48 h at 120°C 3.2% (ISO 1923:1981); loss of mass after being thermostated for 48 h at 120°C 2.14% (PN-ISO 4590:1994
***Example 3. Obtaining foams based on polyols from biomass.*** Premix prepared from 53.43 g (0.8 R) of the product of sorbitol oxypropylenation (Rokopol RF-551) with L_{OH} = 4.20 mg KOH/g; 12.69 g (0.2 R) of biomass polyol with L_{OH} = 442.02 mg KOH/g obtained in the way presented in Example 1; 5.38 g of polysiloxane-polyoxyethylene-polyoxypropylene copolymer; 7.92 g of 33% solution of potassium acetate in diethylene glycol; 3.17 g of 33% solution of 1,4-diazabicyclo[2,2,2]octane in diethylene glycol and 3.16 g of distilled water are mixed with 250.60 g of polymeric 4,4'-diisocyanate diphenylmethane (Purocyn B) with 31% content of -NCO group, and poured into an open form. The resulting product is rigid polyurethane/polyisocyanuric foam with apparent density 42.25 kg/m³ (DIN 53420) ISO 845:1988; brittleness 15.73% (ASTM-C-421-61), compressive strength in the rise direction 347.35 kPa (DIN 53577) ISO 844:1993, oxygen index 23.1% (PN-76/C-89020), water absorption 1.5% (DIN 53433), heat conductivity coefficient 23.4mW/(mK) (Lasercomp FOX 200 heat flow meter); retention 96.1% (ASTM D3014-73), burn rate 0.95 mm/s (PN-78/C-05012), change in linear dimension measured in the rise direction after being thermostated for 48 h at 120°C 1.5% (ISO 1923:1981), change in geometric volume after being thermostated for 48 h at 120°C 3.2% (ISO 1923:1981); loss of mass after being thermostated for 48 h at 120°C 2.11% (PN-ISO 4590:1994).
***Example 4. Obtaining foams based on polyols from biomass.*** Premix prepared from 46.75 g (0,7 R) of the product of sorbitol oxypropylenation (Rokopol RF-551) with L_{OH} = 420 mg KOH/g; 19.04 g (0.3 R) of biomass polyol with L_{OH} = 442.02 mg KOH/g obtained in the way presented in Example 1; 5.38 g of polysiloxane-polyoxyethylene-polyoxypropylene copolymer; 7.91 g of 33% solution of potassium acetate in diethylene glycol; 3.16 g of 33% solution of 1,4-diazabicyclo[2,2,2]octane in diethylene glycol and 3.16 g of distilled water are mixed with 250.60 g of polymeric 4,4'-diisocyanate diphenylmethane (Purocyn B) with 31% content of -NCO group, and poured into an open form. The resulting product is rigid polyurethane/polyisocyanuric foam with apparent density 42.99 kg/m³ (DIN 53420) ISO 845:1988; brittleness 15.48% (ASTM-C-421-61), compressive strength in the rise direction 351.87 kPa (DIN 53577) ISO 844:1993, oxygen index 23.3% (PN-76/C-89020), water absorption 1.4% (DIN 53433), heat conductivity coefficient 2.4 mW/(mK) (Lasercomp FOX 200 heat flow meter); retention 96.1% (ASTM D3014-73), burn rate 0.90 mm/s (PN-78/C-05012), change in linear dimension measured in the rise direction after being thermostated for 48 h at 120°C 1.4% (ISO 1923:1981), change in geometric volume after being thermostated for 48 h at 120°C 3.0% (ISO 1923:1981); loss of mass after being thermostated for 48 h at 120°C 2.01% (PN-ISO 4590:1994).
***Example 5. Obtaining foams based on polyols from biomass.*** Premix prepared from 40.07 g (0,6 R) of the product of sorbitol oxypropylenation (Rokopol RF-551) with L_{OH} = 420 mg KOH/g; 25.8 g (0.4 R) of biomass polyol with L_{OH} = 442.02 mg KOH/g obtained in the way presented in Example 1; 5.37 g of polysiloxane-polyoxyethylene-polyoxypropylene copolymer; 7.90 g of 33% solution of potassium acetate in diethylene glycol; 3.16 g of 33% solution of 1,4-diazabicyclo[2,2,2]octane in diethylene glycol and 3.16 g of distilled water are mixed with 250.60 g of polymeric 4,4'-diisocyanate diphenylmethane (Purocyn B) with 31% content of -NCO group, and poured into an open form. The resulting product is rigid polyurethane/polyisocyanuric foam with apparent density 42.89 kg/m³ (DIN 53420) ISO 845:1988; brittleness 14.54% (ASTM-C-421-61), compressive strength in the rise direction 355.94 kPa (DIN 53577) ISO 844:1993, oxygen index 23.9% (PN-76/C-89020), water absorption 1.4% (DIN 53433), heat conductivity coefficient 23.1mW/(mK) (Lasercomp FOX 200 heat flow meter); retention 96.3% (ASTM D3014-73), burn rate 0.85 mm/s (PN-78/C-05012), change in linear dimension measured in the rise direction after being thermostated for 48 h at 120°C 1.3% (ISO 1923:1981), change in geometric volume after being thermostated for 48 h at 120°C 2.9% (ISO 1923:1981); loss of mass after being thermostated for 48 h at 120°C 1.95% (PN-ISO 4590:1994).
***Example 6. Obtaining foams based on polyols from biomass.*** Premix prepared from 33.39 g (0.5 R) of the product of sorbitol oxypropylenation (Rokopol RF-551) with L_{OH} = 420 mg KOH/g; 31.73 g (0.5 R) of biomass polyol with L_{OH} = 442.02 mg KOH/g obtained in the way presented in Example 1; 5.37 g of polysiloxane-polyoxyethylene-polyoxypropylene copolymer; 7.89 g of 33% solution of potassium acetate in diethylene glycol; 3.16 g of 33% solution of 1,4-diazabicyclo[2,2,2]octane in diethylene glycol and 3.15 g of distilled water are mixed with 250.60 g of polymeric 4,4'-diisocyanate diphenylmethane (Purocyn B) with 31% content of -NCO group, and poured into an open form. The resulting product is rigid polyurethane/polyisocyanuric foam with apparent density 43.51 kg/m³ (DIN 53420) ISO 845:1988; brittleness 14.94% (ASTM-C-421-61), compressive strength in the rise direction 357.65 kPa (DIN 53577) ISO 844:1993, oxygen index 23.6% (PN-76/C-89020), water absorption 1.2% (DIN 53433), heat conductivity coefficient 23.1 mW/(m·K) (Lasercomp FOX 200 heat flow meter); retention 96.6% (ASTM D3014-73), burn rate 0.84 mm/s (PN-78/C-05012), change in linear dimension measured in the rise direction after being thermostated for 48 h at 120°C 1.1% (ISO 1923:1981), change in geometric volume after being thermostated for 48 h at 120°C 2.9% (ISO 1923:1981), loss of mass after being thermostated for 48 h at 120°C 1.99% (PN-ISO 4590:1994).
***Example 7. Obtaining foams based on polyols from biomass.*** Premix prepared from 26.71 g (0.4 R) of the product of sorbitol oxypropylenation (Rokopol RF-551) with L_{OH} = 420 mg KOH/g; 38.08 g (0.6 R) of biomass polyol with L_{OH} = 442.02 mg KOH/g obtained in the way presented in Example 1; 5.36 g of polysiloxane-polyoxyethylene-polyoxypropylene copolymer; 7.88 g of 33% solution of potassium acetate in diethylene glycol; 3.15 g of 33% solution of 1,4-diazabicyclo[2,2,2]octane in diethylene glycol and 3.15 g of distilled water are mixed with 250.60 g of polymeric 4,4'-diisocyanate diphenylmethane (Purocyn B) with 31% content of -NCO group, and poured into an open form. The resulting product is rigid polyurethane/polyisocyanuric foam with apparent density 43.26 kg/m³ (DIN 53420) ISO 845:1988; brittleness 15.01% (ASTM-C-421-61), compressive strength in the rise direction 362.25 kPa (DIN 53577) ISO 844:1993, oxygen index 24.1% (PN-76/C-89020), water absorption 1.3% (DIN 53433), heat conductivity coefficient 22.8 mW/(m·K) (Lasercomp FOX 200 heat flow meter); retention 97.1% (ASTM D3014-73), burn rate 0.80 mm/s (PN-78/C-05012), change in linear dimension measured in the rise direction after being thermostated for 48 h at 120°C 1.1% (ISO 1923:1981), change in geometric volume after being thermostated for 48 h at 120°C 2,.6% (ISO 1923:1981), loss of mass after being thermostated for 48 h at 120°C 1.91% (PN-ISO 4590:1994).
***Example 8. Obtaining foams based on polyols from biomass.*** Premix prepared from 20.04 g (0.3 R) of the product of sorbitol oxypropylenation (Rokopol RF-551) with L_{OH} = 420 mg KOH/g; 44.42 g (0.7 R) of biomass polyol with L_{OH} = 442.02 mg KOH/g obtained in the way presented in Example 1; 5.36 g of polysiloxane-polyoxyethylene-polyoxypropylene copolymer; 7.88 g of 33% solution of potassium acetate in diethylene glycol; 3.15 g of 33% solution of 1,4-diazabicyclo[2,2,2]octane in diethylene glycol and 3.15 g of distilled water are mixed with 250.60 g of polymeric 4,4'-diisocyanate diphenylmethane (Purocyn B) with 31% content of -NCO group, and poured into an open form. The resulting product is rigid polyurethane/polyisocyanuric foam with apparent density 43.89 kg/m³ (DIN 53420) ISO 845:1988; brittleness 14.34% (ASTM-C-421-61), compressive strength in the rise direction 360.25 kPa (DIN 53577) ISO 844:1993, oxygen index 24.2% (PN-76/C-89020), water absorption 1.1% (DIN 53433), heat conductivity coefficient 22.5 mW/m·K (Lasercomp FOX 200 heat flow meter); retention 96.9% (ASTM D3014-73), burn rate 0.76 mm/s (PN-78/C-05012), change in linear dimension measured in the rise direction after being thermostated for 48 h at 120°C 1.1% (ISO 1923:1981), change in geometric volume after being thermostated for 48 h at 120°C 2.7% (ISO 1923:1981), loss of mass after being thermostated for 48 h at 120°C 1.88% (PN-ISO 4590:1994).
***Example 9. Obtaining foams based on polyols from biomass.*** Premix prepared from 13.36 g (0.2 R) of the product of sorbitol oxypropylenation (Rokopol RF-551) with L_{OH} = 420 mg KOH/g; 50.77 g (0.8 R) of biomass polyol with L_{OH} = 442.02 mg KOH/g obtained in the way presented in Example 1; 5.35 g of polysiloxane-polyoxyethylene-polyoxypropylene copolymer; 7.87 g of 33% solution of potassium acetate in diethylene glycol; 3.15 g of 33% solution of 1,4-diazabicyclo[2,2,2]octane in diethylene glycol and 3.14 g of distilled water are mixed with 250.60 g of polymeric 4,4'-diisocyanate diphenylmethane (Purocyn B) with 31% content of -NCO group, and poured into an open form. The resulting product is rigid polyurethane/polyisocyanuric foam with apparent density 43.95 kg/m³ (DIN 53420) ISO 845:1988; brittleness 14.02% (ASTM-C-421-61), compressive strength in the rise direction 366.74 kPa (DIN 53577) ISO 844:1993, oxygen index 24.5% (PN-76/C-89020), water absorption 1.1% (DIN 53433), heat conductivity coefficient 21.8 mW/(m·K) (Lasercomp FOX 200 heat flow meter); retention 97.5% (ASTM D3014-73), burn rate 0.75 mm/s (PN-78/C-05012), change in linear dimension measured in the rise direction after being thermostated for 48 h at 120°C 1.0% (ISO 1923:1981), change in geometric volume after being thermostated for 48 h at 120°C 2.5% (ISO 1923:1981), loss of mass after being thermostated for 48 h at 120°C 1.80% (PN-ISO 4590:1994).
***Example 10. Obtaining foams based on polyols from biomass.*** Premix prepared from 6.68 g (0.1 R) of the product of sorbitol oxypropylenation (Rokopol RF-551) o L_{OH} = 420 mg KOH/g; 57.11 g (0.9 R) of biomass polyol with L_{OH} = 442.02 mg KOH/g obtained in the way presented in Example 1; 5.34 g of polysiloxane-polyoxyethylene-polyoxypropylene copolymer; 7.86 g of 33% solution of potassium acetate in diethylene glycol; 3.14 g of 33% solution of 1,4-diazabicyclo[2,2,2]octane in diethylene glycol and 3.14 g of distilled water are mixed with 250.60 g of polymeric 4,4'-diisocyanate diphenylmethane (Purocyn B) with 31% content of -NCO group, and poured into an open form. The resulting product is rigid polyurethane/polyisocyanuric foam with apparent density 44.28 kg/m³ (DIN 53420) ISO 845:1988; brittleness 14.20% (ASTM-C-421-61), compressive strength in the rise direction 371.05 kPa (DIN 53577) ISO 844:1993, oxygen index 24.7% (PN-76/C-89020), water absorption 1.0% (DIN 53433), heat conductivity coefficient 21.9 mW/(m·K) (Lasercomp FOX 200 heat flow meter); retention 97.9% (ASTM D3014-73), burn rate 0.71 mm/s (PN-78/C-05012), change in linear dimension measured in the rise direction after being thermostated for 48 h at 120°C 0,9% (ISO 1923:1981), change in geometric volume after being thermostated for 48 h at 120°C 2.5% (ISO 1923:1981), loss of mass after being thermostated for 48 h at 120°C 1.81% (PN-ISO 4590:1994).
***Example 11. Obtaining foams based on polyols from biomass.*** Premix prepared from 63.46 g (1.0 R) of biomass polyol with L_{OH} = 442.02 mg KOH/g obtained in the way presented in Example 1; 5.34 g of polysiloxane-polyoxyethylene-polyoxypropylene copolymer; 7.85 g of 33% solution of potassium acetate in diethylene glycol; 3.14 g of 33% solution of 1,4-diazabicyclo[2,2,2]octane in diethylene glycol and 3.14 g of distilled water are mixed with 250.60 g of polymeric 4,4'-diisocyanate diphenylmethane (Purocyn B) with 31% content of -NCO group, and poured into an open form. The resulting product is rigid polyurethane/polyisocyanuric foam with apparent density 43.91 kg/m³ (DIN 53420) ISO 845:1988; brittleness 14.02% (ASTM-C-421-61), compressive strength in the rise direction 375.74 kPa (DIN 53577) ISO 844:1993, oxygen index 24.9% (PN-76/C-89020), water absorption 0.9% (DIN 53433), heat conductivity coefficient 21.5 mW/(mK) (Lasercomp FOX 200 heat flow meter); retention 98.1% (ASTM D3014-73), burn rate 0.71 mm/s (PN-78/C-05012), change in linear dimension measured in the rise direction after being thermostated for 48 h at 120°C 0.9% (ISO 1923:1981), change in geometric volume after being thermostated for 48 h at 120°C 2.2% (ISO 1923:1981), loss of mass after being thermostated for 48 h at 120°C 1.73% (PN-ISO 4590:1994).

## Claims

1. The method for obtaining flame-retardant polyol designated for synthesis of fire-safe, rigid polyurethane foams with increased biodegradability, taking place as a single-stage process based on the reaction of solvolysis, that is, a reaction occurring between solvent containing hydroxyl groups (most advantageously, 2,2'-thiodiethanol), and an agricultural waste in the form of ground oil cakes from e.g. rapeseed, soy, palm, sunflower, linseed, rice, coconut, safflower, hemp, pumpkin, evening primrose, milk thistle, black caraway, and particularly white mustard (*Sinapis alba),* in the presence of acid catalyst in the form of Amberlite ion-exchange resin, **characterized in that** what is subjected to the reaction of solvolysis are 2,2'-thiodiethanol in the amount of 360.00 g together with raw (non-deoiled) oil cake from white mustard (*Sinapis alba*) in the amount of 40.00 g and acid catalyst in the form of Amberlite ion-exchange resin in the amount of 15.00 g (the mass ratio of reagents is 9: 1:0.375 for 2,2'-thiodiethanol, oil cake and catalyst respectively). The reaction of solvolysis is conducted for 4 to 7 hours at the temperature 150-180°C

2. The method of manufacturing rigid polyurethane foams in the reaction of polymer 4,4'-diisocyanate diphenylmethane with polyol that is the product of sorbitol oxypropylenation with L_{OH} = 420 mg KOH/g, with the participation of catalysts in the form of 33% solution of potassium acetate in diethylene glycol and 33% solution of 1,4-diazabicyclo[2,2,2]octane in diethylene glycol, surfactant in the form of polysiloxane-polyoxyethylene-polyoxypropylene copolymer, chemical porophore in the form of distilled water, **characterized in that** the reaction is carried out by replacing the product of sorbitol oxypropylenation with a bio-based polyol with decreased flammability, obtained in the way described in Claim 1.
